# EUROPÄISCHE PATENTSCHRIFT

(11) **EP 3 332 640 B1**
(45) Veröffentlichungstag und Bekanntmachung des Hinweises auf die Patenterteilung: **31.08.2022**
(21) Anmeldenummer: 17203512.3
(22) Anmeldetag: 24.11.2017
(51) Int. Cl.: A01M 21/02, A01M 21/04

(54) **UNKRAUTBESCHÄDIGUNGSVORRICHTUNG**
WEED DAMAGE DEVICE
DISPOSITIF D'ENDOMMAGEMENT DE MAUVAISES HERBES

(30) Priorität: 12.12.2016 DE 102016224733
(43) Veröffentlichungstag der Anmeldung: 13.06.2018
(73) Patentinhaber: Robert Bosch GmbH, 70442 Stuttgart (DE)
(72) Erfinder: Petereit, Steffen, 71691 Freiberg A. N. (DE); Michaels, Andreas, 71272 Renningen (DE)

(56) Entgegenhaltungen:
- EP-A1- 3 500 096
- CA-A1- 2 925 814
- CH-A2- 710 798
- DE-A1-102013 222 776
- US-A- 1 890 301
- US-A1- 2007 113 762

## Beschreibung

### Stand der Technik

Die Erfindung betrifft eine Vorrichtung zur Beschädigung von Unkraut mit einem zwischen einer ersten und einer zweiten Stempelposition bewegbar angeordneten Stempel, welcher einen Stempelendbereich zur Druckbeaufschlagung eines Unkrauts aufweist, um das Unkraut mechanisch zu beschädigen sowie ein System zur Beschädigung von Unkraut aufweisend eine derartige Vorrichtung. Die Erfindung betrifft ferner ein Verfahren zur Beschädigung von Unkraut.

Zur Verringerung des Herbizideinsatzes im Anbau kann Unkraut rein mechanisch entfernt werden, z.B. durch mechanisches Stempeln von Unkräutern zurück in den Erdboden. In den meisten Fällen ist dies ausreichend, um das in den Erdboden zurückgestoßene Gewächs abzutöten. Besonders robuste Unkräuter können dies jedoch überleben und wachsen zurück an die Erdoberfläche. In vielen Fällen ist der dafür benötigte Zeitraum ausreichend, um der Kulturpflanze einen Wachstumsvorsprung zu geben. In langsam wachsenden Kulturen kann dies jedoch nicht ausreichend sein, auch muss das wieder erscheinende Unkraut in den nächsten Jätegängen wiederholt bekämpft werden. Dies erhöht die Zahl der Stempelvorgänge, was zur Verlangsamung des Jätevorgangs führt.

Aus der DE 10 2013 222 776 A1 ist eine Vorrichtung bekannt, bei der eine Druckbeaufschlagung des Unkrauts mittels eines bewegbar gelagerten Stempels erfolgt. Das Unkraut wird hierbei mittels des Stempels gezielt in den Erdboden gedrückt und dadurch mechanisch beschädigt, während die im geringen Abstand hierzu wachsenden Nutzpflanzen unbeschädigt bleiben. Durch Stempeln in den Boden bleibt jedoch an dem Stempel bzw. dem Stempelendbereich feuchtes Erdreich haften. Z Aus den US 1 890 301 A, US 2007/113762 A1, CA 2 925 814 A1, CH 710 798 A2 sind weitere Vorrichtungen bekannt.

### Offenbarung der Erfindung

Vor diesem Hintergrund werden mit dem hier vorgestellten Ansatz eine Vorrichtung und ein System gemäß der vorgenannten Art vorgestellt, wobei der Stempel einen Stempelkanal aufweist, in dem ein Reinigungsstift angeordnet ist, um den Stempelendbereich des Stempels zu reinigen, und/oder welcher fluidisch mit einer vorgesehenen Druckgasabgabeeinheit verbunden und/oder verbindbar ist, um den Stempelendbereich des Stempels mittels eines Druckgases zu reinigen.

Der hier vorgestellte Ansatz schafft außerdem ein Verfahren zur Beschädigung von Unkraut, welches insbesondere mittels einer Vorrichtung oder einem System gemäß der vorgenannten Art durchgeführt wird, mit den Schritten:
- Bereitstellen eines zwischen einer ersten und einer zweiten Stempelposition bewegbar angeordneten Stempels mit einem Stempelendbereich und einem Stempelkanal;
- Bereitstellen eines Reinigungsstiftes in dem Stempelkanal des Stempels und/oder einer Druckgasabgabeeinheit, welche fluidisch mit dem Stempelkanal verbunden und/oder verbindbar ist;
- Druckbeaufschlagen des Unkrauts mittels des Stempelendbereich des Stempels, um das Unkraut mechanisch zu beschädigen; und
- Positionieren des Reinigungsstiftes derart, dass ein dem Stempelendbereich zugewandtes Reinigungsstiftende außerhalb des Stempelkanals angeordnet ist, um den Stempelendbereich des Stempels zu reinigen, und/oder Abgeben von Druckgas an den Stempelendbereich des Stempels mittels einer Druckgasabgabeeinheit, um den Stempelendbereich des Stempels mittels des Druckgases zu reinigen.

Unter einem Unkraut wird hierbei eine im Wesentlichen spontane, unerwünschte Besiedlung einer Bodenfläche verstanden. Eine solche Unkrautbesiedlung zwischen Nutzpflanzen ist insbesondere unerwünscht, da hierdurch deren Wachstum behindert wird.

Der Stempel ist ausgebildet bzw. eingerichtet, um ein Unkraut mechanisch zu beschädigen. Der Stempel kann länglich ausgebildet sein. Der Stempel kann ferner zylinderförmig ausgebildet sein. Der Stempel kann einen konstanten oder variierenden Querschnitt aufweisen. Der Stempel kann bevorzugt kreiszylinderförmig ausgebildet sein. Der Stempel kann eine Stempelstange aufweisen, welche in einer Lagereinheit geführt angeordnet ist.

Der Stempel ist erfindungsgemäß translatorisch bewegbar, in der Lagereinheit gelagert. Die Lagereinheit umfasst ein oder mehrere Gleitlager .

Die translatorische Bewegung kann eine rein lineare Bewegung sein. Die translatorische Bewegung kann jedoch auch zusätzlich zu der linearen Bewegung eine überlagerte rotatorische Komponente aufweisen. Demnach kann der Stempel auch durch eine Rotationsbewegung, bspw. eine schraubenförmige Bewegung, resultierend eine translatorische Bewegung durchführen und somit translatorisch bewegbar gelagert sein.

Die Stempelbewegung kann eine Ausfahrbewegung, eine anschließende Druckbeaufschlagung des Unkrauts und eine Einfahrbewegung umfassen. Unter einem Druckbeaufschlagen kann bspw. ein Stempelvorgang verstanden werden. Die Druckbeaufschlagung kann auch einen Schneidvorgang umfassen bzw. ein Schneidvorgang sein.

Die erste Stempelposition des Stempels ist bevorzugt eine Einfahrposition, bei der der Stempel eingefahren ist. Die erste Stempelposition kann eine erste Endposition des Stempels sein. Die zweite Stempelposition des Stempels ist bevorzugt eine Ausfahrposition, bei der der Stempel ausgefahren ist. Die zweite Stempelposition bzw. die Ausfahrposition kann eine Druckbeaufschlagungsposition sein, d.h. eine Stempelposition, bei der der Stempel das Unkraut mit Druck beaufschlagt. Die zweite Stempelposition kann eine zweite Endposition des Stempels sein.

Der Stempelendbereich des Stempels ist auf einer dem Unkraut bzw. dem Erdboden zugewandten Seite des Stempels angeordnet. Der Stempelendbereich kann ein Stempelende sein.

Der Stempelkanal des Stempels erstreckt sich bevorzugt bis zum Stempelendbereich des Stempels. Der Stempelkanal des Stempels kann sich bevorzugt entlang einer Längsrichtung des Stempels erstrecken.

Der Reinigungsstift ist ausgebildet bzw. eingerichtet, um den Stempelendbereich von Verschmutzung mechanisch zu reinigen. Der Reinigungsstift kann länglich ausgebildet sein. Der Reinigungsstift kann ferner zylinderförmig ausgebildet sein. Der Reinigungsstift kann einen konstanten oder variierenden Querschnitt aufweisen. Der Reinigungsstift kann bevorzugt kreiszylinderförmig ausgebildet sein. Der Stempel und der Reinigungsstift sind bevorzugt translatorisch zueinander angeordnet. Der Stempel kann an dem Reinigungsstift geführt bzw. gelagert sein. Der Reinigungsstift kann jedoch auch translatorisch bewegbar in dem Stempelkanal des Stempels angeordnet bzw. gelagert sein.

Die Druckgasabgabeeinheit kann ausgebildet sein, mittels Druckgasspülung den Stempelendbereich bzw. das Stempelende des Stempels zu reinigen. Die Druckgasabgabeeinheit kann bspw. mittels eines Ventils mit dem Stempelkanal des Stempels verbindbar sein.

Unter einem Druckgas kann im Rahmen dieser Erfindung ein komprimiertes Gas oder Gasgemisch verstanden werden. Das Druckgas kann bspw. Druckluft, d.h. unter Überdruck befindliche Luft sein.

Unter einer Reinigung kann im Rahmen der vorliegenden Erfindung ein aktives Entfernen einer Verschmutzung bzw. der Ansammlung von Verschmutzung verstanden werden. Die Verschmutzung kann hierbei Sand, Staub und/oder Erdmasse bzw. Erdreich umfassen.

Das Fahrzeug kann ein Traktoranbaugerät oder ein selbstfahrendes Arbeitsfahrzeug sein. Das System kann automatisch oder autonom geführt sein. Das System kann jedoch auch handgeführt ausgestaltet sein. Hierbei kann das System einen stockartigen Träger aufweisen, an dem die Unkrautbeschädigungsvorrichtung angeordnet bzw. in dem die Unkrautbeschädigungsvorrichtung integriert ist.

Es nunmehr erfindungsgemäß möglich, bei der Stempelbewegung bzw. bei der Druckbeaufschlagung an dem Stempel bzw. dem Stempelendbereich des Stempels anhaftende Verschmutzung, wie feuchte bzw. klebrige Erdmasse, von dem Stempel zu entfernen, so dass zum einen die nachfolgende Stempelbewegung und insbesondere Druckbeaufschlagung effektiv durch einen schmutzfreien Stempelendbereich durchgeführt und zum anderen die vorgesehene Dynamik der Stempelbewegung beibehalten werden können.

Es ist ferner vorteilhaft, wenn die Druckgasabgabeeinheit ausgebildet ist, eine definierte bzw. regulierte Menge an Druckgas an den Stempelkanal und/oder den Stempelendbereich des Stempels abzugeben. Hierbei ist es insbesondere vorteilhaft, wenn die Druckgasabgabeeinheit und der Stempelkanal in der ersten und in der zweiten Stempelposition fluidisch voneinander getrennt und zwischen der ersten und der zweiten Stempelposition zumindest teilweise fluidisch miteinander verbunden sind. Unter einem Abgeben des Druckgases kann bspw. ein Leiten des Druckgases verstanden werden. Unter einer definierten bzw. regulierten Abgabe kann im Rahmen der vorliegenden Erfindung eine kontrollierte Abgabe verstanden werden. Bei der definierten bzw. regulierten Abgabe handelt es sich demnach um eine einem geordneten bzw. gewünschten Ablauf folgenden Abgabe einer begrenzten Gasmenge. Durch diese Maßnahme kann auf sehr einfache Art und Weise eine effektive und zugleich ressourcen- bzw. energiesparende Reinigung des Stempelendbereiches mittels des Druckgases, d.h. einer Druckgasspülung/-reinigung durchgeführt werden.

Außerdem ist es vorteilhaft, wenn der Reinigungsstift derart in dem Stempelkanal des Stempels angeordnet und ferner ausgebildet ist, dass bei der ersten Stempelposition des Stempels ein dem Stempelendbereich zugewandte Reinigungsstiftende außerhalb des Stempelkanals und bei der zweiten Stempelposition des Stempels das dem Stempelendbereich zugewandte Reinigungsstiftende innerhalb des Stempelkanals angeordnet ist. Durch diese Maßnahme kann sehr einfach eine Anordnung realisiert werden, bei der während der Druckbeaufschlagung des Unkrauts der Reinigungsstift in dem Stempel bzw. dem Stempelkanal angeordnet ist, und anschließend während der Einfahrbewegung des Stempels dieser aus dem Stempel bzw. dem Stempelkanal herausfährt, um den Stempelendbereich effektiv von anhaftender, klebriger Erdmasse zu reinigen.

Des Weiteren ist es vorteilhaft, wenn der Reinigungsstift zumindest einen Reinigungsstiftkanal aufweist, welcher fluidisch mit der Druckgasabgabeeinheit und/oder einer vorgesehenen Wirkstoffabgabeeinheit verbunden und/oder verbindbar ist. Hierbei ist es insbesondere vorteilhaft, wenn sich der zumindest eine Reinigungsstiftkanal innerhalb des Reinigungsstiftes und/oder an einer innerhalb des Stempelkanals angeordneten Außenfläche des Reinigungsstiftes entlang einer Längsrichtung des Reinigungsstiftes erstreckt. Der Wirkstoff kann gasförmig, flüssig, pulverförmig, staubförmig oder feststoffförmig ausgebildet sein. Der Wirkstoff ist bevorzugt ein Unkrautvernichtungsmittel bzw. ein Herbizid. Durch die fluidische Verbindung des Reinigungsstiftkanals mit der Druckgasabgabevorrichtung kann vorteilhafterweise eine kombinierte Reinigung des Stempelendbereiches aus mechanischer Reinigung mittels des Reinigungsstiftes und zugleich eine Druckgasreinigung mittels des Druckgases realisiert werden. Alternativ oder zusätzlich kann durch die fluidische Verbindung des Reinigungsstiftkanals mit der Wirkstoffabgabeeinheit ein Wirkstoff an den Stempelendbereich des Stempels abgegeben werden, so dass bei der darauffolgenden Druckbeaufschlagung ein effektiver kombinierter Vorgang aus mechanischer und chemischer Beschädigung des Unkrauts gleichzeitig bzw. unmittelbar nacheinander durchgeführt werden kann. Hierbei fährt der Stempel nach der Abgabe des Wirkstoffes an den Stempelendbereich aus und es erfolgt eine Druckbeaufschlagung bzw. eine Stempelung des Unkrauts mittels des Stempelendbereiches des Stempels, wodurch das Unkraut mechanisch beschädigt wird. Durch die Zertrümmerung der Pflanze platzen die Kapillaren und die Pflanzenzellen reißen auf. Da an dem Stempelendbereich bzw. dem Stempelende der zuvor abgegebene Wirkstoff angeordnet ist, kommt die Pflanzenmasse gleichzeitig zu bzw. unmittelbar nach der mechanischen Vorbeschädigung in direkten Kontakt mit dem Wirkstoff, so dass dieser direkt am Pflanzenkörper bzw. am biologischen Material wirken kann und das Unkraut zusätzlich chemisch beschädigt.

Ferner ist es vorteilhaft, wenn die Druckgasabgabeeinheit ausgebildet ist, eine definierte Menge an Druckgas und/oder die Wirkstoffabgabeeinheit ausgebildet ist, eine definierte Menge an Wirkstoff an den Reinigungsstiftkanal und/oder den Stempelendbereich des Stempels abzugeben. Insbesondere ist es vorteilhaft, wenn das Reinigungsstiftende des Reinigungsstiftes ausgebildet ist, den Stiftkanal am Stempelendbereich in der ersten Stempelposition des Stempels zu öffnen, um eine Abgabe des Druckgases und/oder des Wirkstoffes zu erlauben, und in der zweiten Stempelposition des Stempels zu verschließen, um eine Abgabe des Druckgases und/oder des Wirkstoffes zu verhindern. Unter einem Abgeben des Druckgases bzw. Wirkstoffes kann bspw. ein Leiten des Druckgases bzw. des Wirkstoffes verstanden werden. Durch diese Maßnahme kann zum einen eine effektive und zugleich ressourcen- bzw. energiesparende Reinigung des Stempelendbereiches mittels des Druckgases, d.h. einer Druckgasspülung/-reinigung und/oder eine wirkungsvolle Beschädigung bzw. Abtötung von Unkraut bei einer erheblichen Minimierung der notwendigen Wirkstoffmenge durchgeführt werden. Zum anderen kann sehr einfach eine Anordnung realisiert werden, bei der während der Druckbeaufschlagung des Unkrauts der Reinigungsstiftkanal verschlossen ist, und anschließend während der Einfahrbewegung des Stempels für einen definierten Zeitraum geöffnet wird, um den Stempelendbereich effektiv von bspw. anhaftender, klebriger Erde zu reinigen und/oder den Wirkstoff an den Stempelendbereich für den nachfolgenden Stempelvorgang abzugeben.

Es ist außerdem vorteilhaft, wenn ein pneumatisch betriebener Aktor vorgesehen ist, welcher ausgebildet ist, den Stempel zwischen der ersten und der zweiten Stempelposition zu bewegen, wobei die Druckgasabgabeeinheit ausgebildet ist, das bei der Einfahrbewegung des Stempels in die erste Stempelposition von dem pneumatisch betriebenen Aktor verdrängte Abgas zumindest teilweise in den Stempelkanal und/oder den Reinigungsstiftkanal zu leiten. Der pneumatisch betriebene Aktor ist bevorzugt ein Pneumatikzylinder. Der Pneumatikzylinder ist je nach Anwendungsfall einseitig oder beidseitig mit Druckgas beaufschlagbar. D.h., dass der Pneumatikzylinder einfachwirkend oder doppelwirkend sein kann. Bei dem einfachwirkenden Pneumatikzylinder kann die Rückstellung mittels einer Rückstellfeder erfolgen. Der Pneumatikzylinder weist eine Vortriebskammer und eine Rückhubkammer auf. Der Pneumatikzylinder ist bevorzugt beidseitig mit Druckgas beaufschlagbar ausgebildet. Unter dem Abgas kann hierbei die Gasmenge bzw. Luftmenge, welche bei der Entlüftung des pneumatisch betriebenen Aktors verdrängt wird, verstanden werden. Hierbei kann jedoch auch nur ein Teil dieses Abgases bzw. der verdrängten Gas-/Luftmenge verstanden werden. Das Abgas bzw. die Abluft kann hierbei die aus der Vortriebskammer und/oder der Rückhubkammer des Pneumatikzylinders verdrängte Gasmenge sein. Hierbei kann die Druckgasabgabeeinheit ein Entlüftungsventil zur definierten bzw. regulierten Abgabe des Abgases des pneumatisch betriebenen Aktors an den Stempelkanal bzw. den Reinigungsstiftkanal des Stempels aufweisen. Durch diese Maßnahme kann sehr einfach und kostengünstig das Druckgas zur Reinigung des Stempelendbereiches bzw. des Stempelendes bereitgestellt werden.

Es ist auch vorteilhaft, wenn der Stempelendbereich eine Vertiefung aufweist, welche fluidisch mit dem Stempelkanal und/oder dem Reinigungsstiftkanal verbunden und/oder verbindbar ist. Hierbei ist es insbesondere vorteilhaft, wenn die Vertiefung kegelförmig oder kegelstumpfförmig ausgebildet ist. D.h. mit anderen Worten, dass der Stempel an seinem Stempelendbereich bzw. Stempelende eingesenkt ist. Vorteilhaft ist es des Weiteren, wenn der Stempel an dem Stempelendbereich scharfkantig, insbesondere als ringförmige Schneide ausgebildet ist. Beim Stempel- bzw. Stanzvorgang wird der Pflanzenkörper des Unkrauts durch den Stempelendbereich des Stempels auf/in den Erdboden gedrückt bzw. gerammt und damit stark komprimiert. Demnach kann durch einen scharfkantiges Stempelendbereich, welches insbesondere als ringförmige Schneide ausgebildet ist, der Stempelvorgang bzw. die Beschädigung des Unkrauts noch effektiver durchgeführt werden und dabei bspw. auch die aus dem Stempelbereich herausstehenden Blätter des Unkrauts abgeschnitten werden. Außerdem kann in dieser Vertiefung bzw. Tasche der Wirkstoff sehr einfach und sicher abgegeben werden, so dass beim Stempelvorgang, wenn die Vertiefung über das Unkraut "gestülpt" wird, eine geringe Menge von Wirkstoff effektiver an das Unkraut abgegeben werden kann.

### Zeichnungen

Die Erfindung wird nachstehend anhand der beigefügten Zeichnungen beispielhaft näher erläutert. Es zeigen:
- Figur 1a-c: eine schematische Darstellung einer ersten Ausgestaltung einer Unkrautbeschädigungsvorrichtung mit einer Druckgasabgabeeinheit;
- Figur 2a-c: eine schematische Darstellung einer weiteren Ausgestaltung einer Unkrautbeschädigungsvorrichtung mit einem Reinigungsstift;
- Figur 3a-c: eine schematische Darstellung einer weiteren Ausgestaltung einer Unkrautbeschädigungsvorrichtung mit einem Reinigungsstift und einem Wirkstoffabgabevorgang;
- Figur 4a-c: eine schematische Darstellung einer weiteren Ausgestaltung einer Unkrautbeschädigungsvorrichtung mit einem Reinigungsstift und einem Wirkstoffabgabevorgang;
- Figur 5: eine schematische Darstellung eines Systems aufweisend eine erfindungsgemäße Unkrautbeschädigungsvorrichtung; und
- Figur 6: ein Ablaufdiagramm eines Verfahrens zur Beschädigung von Unkraut mit einem Reinigungsvorgang.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung der Elemente verzichtet wird.

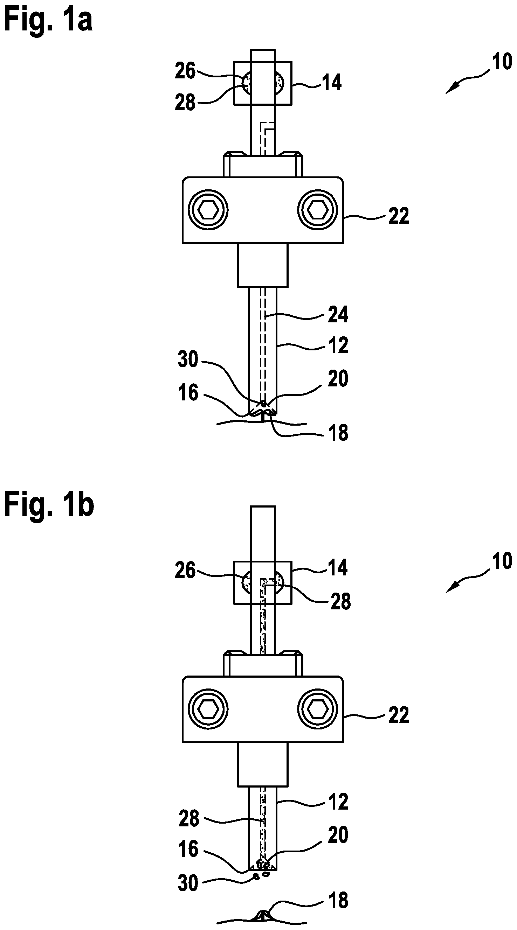

In den Fig. 1a-c ist eine erfindungsgemäße Unkrautbeschädigungsvorrichtung bzw. Vorrichtung zur Beschädigung von Unkraut in ihrer Gesamtheit mit der Bezugsziffer 10 versehen.

Die Vorrichtung 10 weist einen Stempel 12 und eine Druckgasabgabeeinheit 14 auf.

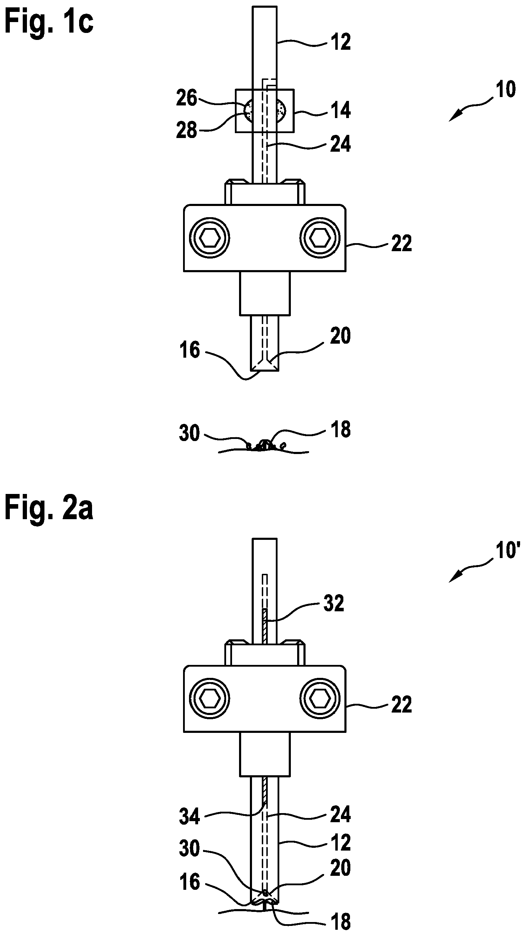

Der Stempel 12 ist länglich ausgebildet. Der Stempel 12 ist kreiszylinderförmig ausgebildet. Der Stempels 12 weist einen Stempelendbereich16 bzw. ein Stempelende 16 auf. Der Stempelendbereich 16 bzw. das Stempelende 16 dient zur Druckbeaufschlagung eines Unkrauts 18, um dieses mechanisch zu beschädigen. Der Stempel 12 weist an seinem Stempelendbereich 16 eine Vertiefung 20 auf. Die Vertiefung 20 ist kegelförmig bzw. kegelstumpfförmig ausgebildet. Aufgrund der Ausgestaltung der Vertiefung 20 ist der Stempelendbereich 16 in Umfangsrichtung scharfkantig ausgebildet. Demnach ist der Stempelendbereich 16 teilweise als ringförmige Schneide 16 ausgebildet, um das Unkraut 18 effektiver mechanisch zu beschädigen. Der Stempel 12 ist an einem Lagerelement 22 translatorisch bewegbar gelagert. Der Stempel 12 ist dabei zwischen einer in Fig. 1c gezeigten ersten Stempelposition, d.h. einer Einfahrposition und einer in Fig. 1a gezeigten zweiten Stempelposition, d.h. einer Ausfahrposition bewegbar gelagert.

Der Stempel 12 weist ferner einen Stempelkanal 24 auf. Der Stempelkanal 24 ist im Stempel 12 angeordnet. Der Stempelkanal 24 erstreckt sich bis zum Stempelendbereich 16 bzw. der Vertiefung 20 des Stempels 12. Der Stempelkanal 24 erstreckt sich im Wesentlichen entlang einer Längsachse des Stempels 12. Wie aus der nachfolgenden Beschreibung der Stempelbewegung ersichtlich wird, ist der Stempelkanal 24 mit der Druckgasabgabeeinheit 14 zwischen der Einfahrposition und der Ausfahrposition des Stempels 12 fluidisch verbindbar.

Die Druckgasabgabeeinheit 14 ist ringförmig ausgebildet. Die Druckgasabgabeeinheit 14 ist in Umfangsrichtung um den Stempel 12 angeordnet. Die Druckgasabgabeeinheit 14 weist eine Kammer 26 auf. Die Kammer 26 enthält ein Druckgas 28. Das Druckgas 28 ist hierbei komprimierte Luft, d.h. Druckluft 28. Die Druckgasabgabeeinheit 14 dient dazu, das Druckgas 28 bzw. die Druckluft 28 über den Stempelkanal 24 an dem Stempelendbereich 16 des Stempels 12 abzugeben bzw. zu leiten, um den Stempelendbereich 16 zu reinigen.

Ohne den Rahmen der vorliegenden Erfindung zu verlassen, kann die Druckgasabgabeeinheit 14 auch Teil eines (nicht gezeigten) pneumatisch betriebenen Aktors sein, welcher ausgebildet ist, den Stempel 12 zwischen der ersten und der zweiten Stempelposition zu bewegen. Hierbei kann die Druckgasabgabeeinheit 14 ausgebildet sein, das bei der Einfahrbewegung des Stempels 12 in die erste Stempelposition von dem pneumatisch betriebenen Aktor verdrängte Abgas, bspw. die Abluft, als Druckgas 28 zu verwenden und zumindest teilweise in den Stempelkanal 24 zu leiten, um den Reinigungsvorgang des Stempelendbereiches 16 durchzuführen. In Fig. 1a-c ist eine Teilsequenz der Stempelbewegung mit einer Reinigung des Stempelendbereiches 16 mittels des Druckgases 28 gezeigt.

Fig. 1a zeigt einen Zeitpunkt der Druckbeaufschlagung des Unkrauts 18 durch den Stempelendbereich 16 bzw. das Stempelende 16 des Stempels 12. Der Stempel 12 befindet sich in der zweiten Stempelposition, d.h. der Ausfahrposition. Hierbei ist die Vertiefung 20 am Stempelendbereich 16 über dem Unkraut 18 "gestülpt" und es erfolgt eine mechanische Beschädigung des Unkrauts 18, ggf. mit einem Schneidvorgang. Ferner sind der Stempelkanal 24 des Stempels 12 und die Druckgasabgabeeinheit 14 bzw. die das Druckgas 28 aufweisende Kammer 26 der Druckgasabgabeeinheit 14 fluidisch voneinander getrennt. Der Stempel 12 wirkt hierbei quasi als Ventilschieber und trennt die fluidische Verbindung. Demnach kann das Druckgas 28 nicht über den Stempelkanal 24 an den Stempelendbereich 16 abgegeben werden. Wie ferner ersichtlich, ist am Stempelendbereich 16 bzw. in der Vertiefung 20 des Stempelendbereiches 16 durch den Kontakt mit dem Erdboden Erdmasse 30 bzw. Erdreich 30, welches insbesondere feucht und klebrig ist, haften geblieben.

Fig. 1b zeigt einen Zeitpunkt während der Einfahrbewegung des Stempels 12 vor dem Erreichen der ersten Stempelposition, d.h. der Einfahrposition, zu dem bei einem vordefinierten Fahrweg des Stempels 12 der Stempelkanal 24 und die Druckgasabgabeeinheit 14 fluidisch miteinander verbunden sind. Durch die fluidische Verbindung während der Einfahrbewegung kann für einen bestimmten Zeitraum eine vordefinierte Menge des Druckgases 28 aus der Kammer 26 über den Stempelkanal 24 zu dem Stempelendbereich 16 fließen, um dieses von der haftenden Erdmasse 30 zu reinigen. Der Reinigungseffekt wird durch die sich lösende und abfallende Erdmasse 30 deutlich.

Wie aus Fig. 1c ersichtlich, wird die fluidische Verbindung von dem Stempelkanal 24 und der Druckgasabgabeeinheit 14 nach Fortsetzung der Einfahrbewegung und spätestens bei Erreichen der ersten Stempelposition, d.h. der Einfahrposition des Stempels 12 wieder getrennt.

Demnach kann mittels des Druckgases 28 bzw. einer vordefinierten Menge des Druckgases 28 der Druckgasabgabeeinheit 14 der Stempelendbereich 16 des Stempels 12 von Verschmutzung wie anhaftender Erdmasse 30 gereinigt werden, um die Effizient nachfolgender Stempelvorgänge zu gewährleisten.

In den Fig. 2a-c ist eine weitere Unkrautbeschädigungsvorrichtung bzw. Vorrichtung zur Beschädigung von Unkraut in ihrer Gesamtheit mit der Bezugsziffer 10' versehen.

Analog zu der Vorrichtung 10 aus Fig. 1a-c weist die Vorrichtung 10' aus Fig. 2a-c ebenfalls einen Stempel 12 mit einem Stempelendbereich 16 zur Druckbeaufschlagung des Unkrauts 18 auf, um dieses mechanisch zu beschädigen. Wie zuvor beschrieben, weist der Stempel 12 ferner einen Stempelkanal 24 auf, welcher im Stempel 12 angeordnet ist und sich im Wesentlichen entlang einer Längsachse des Stempels 12 erstreckt. Zur Reinigung des Stempelendbereiches 16 weist die Vorrichtung 10' jedoch einen Reinigungsstift 32 auf.

Der Reinigungsstift 32 ist länglich ausgebildet. Der Reinigungsstift 32 ist ferner kreiszylinderförmig ausgebildet. Der Reinigungsstift 32 weist ein Reinigungsstiftende 34 auf. Das Reinigungsstiftende 34 ist dem Stempelendbereich 16 zugewandt. Der Reinigungsstift 32 ist in dem Stempelkanal 24 des Stempels 12 angeordnet. Der Reinigungsstift 32 ist relativ zu der Vorrichtung 10' bzw. zu der Lagereinheit 22 fest angeordnet bzw. gelagert. Demnach ist der Stempel 12 relativ zum Reinigungsstift 32 bewegbar angeordnet bzw. gelagert.

Wie aus der nachfolgenden Beschreibung der Stempelbewegung ersichtlich wird, ist der Reinigungsstift 32 derart ausgebildet und in dem Stempelkanal 24 des Stempels 12 angeordnet, dass bei der zweiten Stempelposition des Stempels 12, d.h. bei der Druckbeaufschlagung des Unkrauts 18 das dem Stempelendbereich 16 zugewandte Reinigungsstiftende 34 innerhalb des Stempelkanals 24 angeordnet ist und nach der Rückführung des Stempels 12 in die erste Stempelposition, d.h. der Einfahrposition, das Reinigungsstiftende 34 aus dem Stempelkanal 24 ausgefahren ist, um den Stempelendbereich 16 zu reinigen.

In Fig. 2a-c ist eine Teilsequenz der Stempelbewegung mit einer Reinigung des Stempelendbereiches 16 mittels des Reinigungsstiftes 32 gezeigt.

Fig. 2a zeigt einen Zeitpunkt der Druckbeaufschlagung des Unkrauts 18 durch den Stempelendbereich 16 des Stempels 12. Der Stempel 12 befindet sich in der zweiten Stempelposition, d.h. der Ausfahrposition. Hierbei ist die Vertiefung 20 am Stempelendbereich 16 über dem Unkraut 18 "gestülpt" und es erfolgt eine mechanische Beschädigung des Unkrauts 18, ggf. mit einem Schneidvorgang. Ferner ist das Reinigungsstiftende 34 des Reinigungsstiftes 32 in dem Stempelkanal 24 angeordnet. Demnach erfolgt zu diesem Zeitpunkt keine Reinigung des Stempelendbereiches 16. Wie ferner ersichtlich, ist am Stempelendbereich 16 bzw. in der Vertiefung 20 des Stempelendbereiches 16 durch den Kontakt mit dem Erdboden Erdmasse 30 bzw. Erdreich 30, welches insbesondere feucht und klebrig ist, haften geblieben.

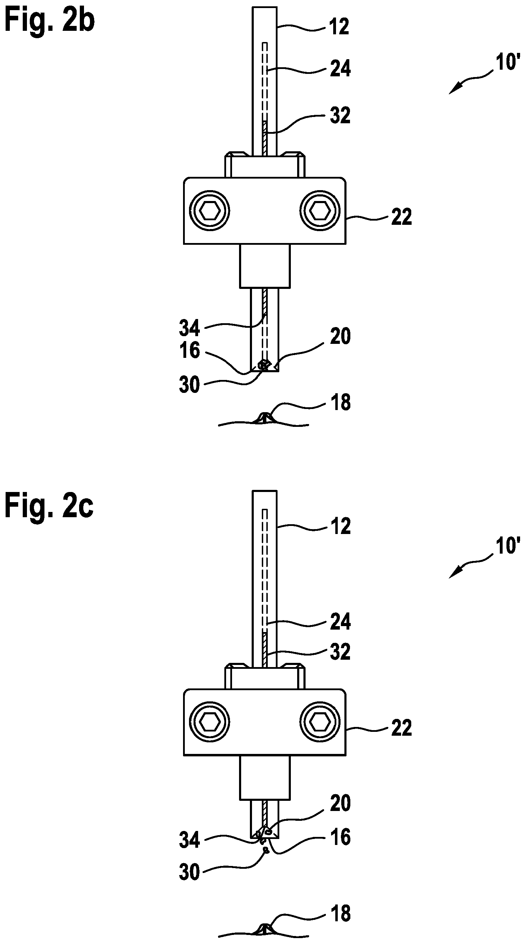

Fig. 2b zeigt einen Zeitpunkt während der Einfahrbewegung des Stempels 12 vor dem Erreichen der ersten Stempelposition, d.h. der Einfahrposition. Zu diesem Zeitpunkt weist der Stempelendbereich 16 noch die anhaftende Erdmasse 30 auf und ist demnach verschmutzt. Hierbei ist ersichtlich, dass sich der Stempel 12 im Vergleich zu der Darstellung auf Fig. 1a relativ zu dem fest angeordneten bzw. gelagerten Reinigungsstift 32 in Richtung Einfahrposition bewegt hat. Folglich hat sich der Stempelendbereich 16 des Stempels 12 dem Reinigungsstiftende 34 des Reinigungsstiftes 32 genähert. D.h., mit anderen Worten, dass sich der Abstand zwischen dem zu reinigenden Stempelendbereich 16 und dem Reinigungsstiftende 34 verkleinert hat.

Wie aus Fig. 2c ersichtlich, hat sich bei Erreichen der Einfahrposition des Stempels 12 das Reinigungsstiftende 34 aus dem Stempelkanal 24 in den Bereich des Stempelendes 16 bzw. den Stempelendbereich 16 verschoben. Demnach ist in dieser Einfahrposition des Stempels 12 das dem Stempelendbereich 16 zugewandte Reinigungsstiftende 34 außerhalb des Stempelkanals 24 angeordnet, um dieses von der haftenden Erdmasse 30 zu reinigen. Der Reinigungseffekt wird durch die sich lösende und abfallende Erdmasse 30 deutlich.

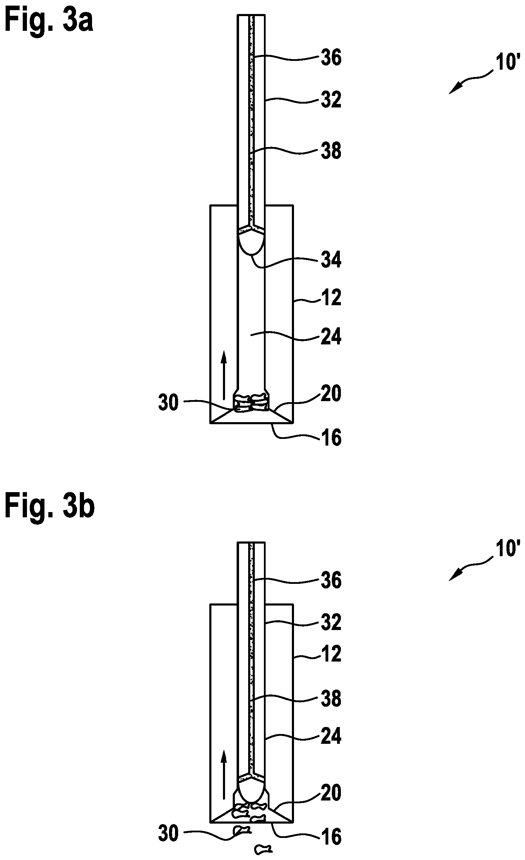

Demnach kann mittels des Reinigungsstiftes 32 der Stempelendbereich 16 des Stempels 12 von Verschmutzung wie anhaftender Erdmasse 30 gereinigt werden, um die Effizient nachfolgender Stempelvorgänge zu gewährleisten. Fig. 3a-c zeigen eine weitere Ausgestaltung des Reinigungsstiftes 32 einer Vorrichtung 10'. Im Vergleich zu dem Ausführungsbeispiel aus Fig. 2a-c weist der Reinigungsstift 32 zusätzlich einen Reinigungsstiftkanal 36 auf. Der Reinigungsstiftkanal 36 ist innerhalb des Reinigungsstiftes 32 angeordnet. Der Reinigungsstiftkanal 36 erstreckt sich im Wesentlichen entlang einer Längsachse des Reinigungsstiftes 32 bis zu dem Reinigungsstiftende 34 bzw. in den Bereich des Reinigungsstiftendes 34. Der Reinigungsstiftkanal 36 ist im Bereich des Reinigungsstiftendes 34 ringförmig ausgebildet. Der Reinigungsstiftkanal 36 ist hierbei fluidisch mit einer (nicht gezeigten) Wirkstoffabgabeeinheit verbindbar, welche einen Wirkstoff 38 bzw. ein Herbizid 38 aufweist.

Wie aus der nachfolgenden Beschreibung der Teilsequenz der Stempelbewegung ersichtlich wird, dient der Reinigungsstiftkanal 36 zur Abgabe des Wirkstoffes 38 bzw. des Herbizids 38 an den Stempelendbereich 16. Hierbei wird insbesondere ersichtlich, dass das Reinigungsstiftende 34 des Reinigungsstift 32 ausgebildet ist, den Reinigungsstiftkanal 36 am Stempelendbereich 16 in der ersten Stempelposition des Stempels 12 zu öffnen, um eine Abgabe des Wirkstoffes 38 zu erlauben, und in der zweiten Stempelposition des Stempels 12 zu verschließen, um eine Abgabe des Wirkstoffes 38 zu verhindern.

Fig. 3a zeigt einen Zeitpunkt während der Einfahrbewegung des Stempels 12 vor dem Erreichen der ersten Stempelposition, d.h. der Einfahrposition. Wie hierbei ersichtlich, ist der Wirkstoff 38 in dem Reinigungsstiftkanal 36 angeordnet. Der Wirkstoff 38 kann jedoch nicht aus dem Reinigungsstiftkanal 36 austreten und somit an den Stempelendbereich 16 abgegeben werden, da die fluidische Verbindung zwischen dem Reinigungsstiftkanal 36 und dem Stempelendbereich 16 getrennt ist. Zu diesem Zeitpunkt weist der Stempelendbereich 16 noch die anhaftende Erdmasse 30 auf und ist demnach verschmutzt.

Wie aus Fig. 3b ersichtlich, hat sich kurz vor dem Erreichen der Einfahrposition des Stempels 12 das Reinigungsstiftende 34 aus dem Stempelkanal 24 in den Bereich des Stempelendbereiches 16 verschoben. Demnach ist in dieser Stempelposition des Stempels 12 das dem Stempelendbereich 16 zugewandte Reinigungsstiftende 34 teilweise außerhalb des Stempelkanals 24 angeordnet, um dieses von der haftenden Erdmasse 30 zu reinigen. Der Reinigungseffekt wird durch die sich lösende und abfallende Erdmasse 30 deutlich.

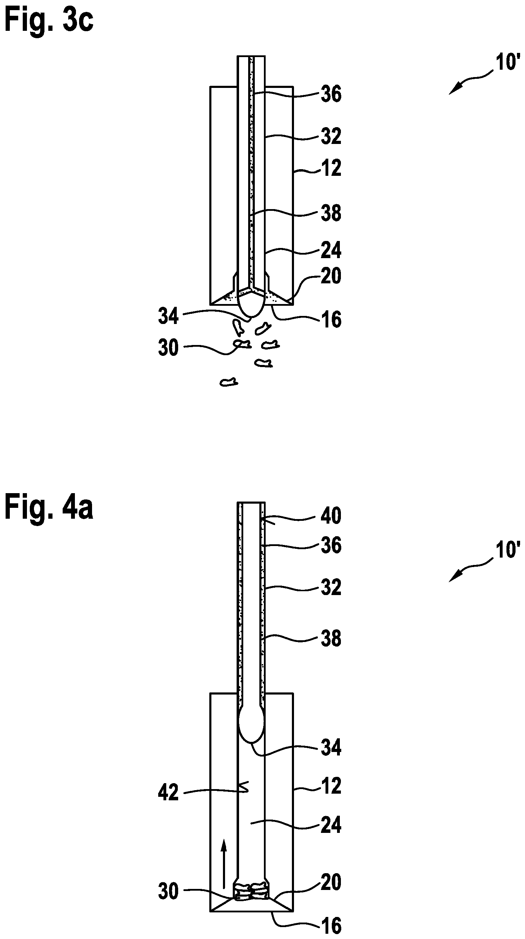

In Fig. 3c ist nun gezeigt, wie bei Erreichen der Einfahrposition des Stempels 12 der Wirkstoff 38 an den zuvor gereinigten Stempelendbereich 16 abgegeben wird. Hierbei ist der Reinigungsstiftkanal 36 mit dem Stempelendbereich 16 bzw. der Vertiefung 20 fluidisch verbunden, so dass der Wirkstoff 38 aus dem Reinigungsstiftkanal 36 austreten und an den Stempelendbereich 16 bzw. die Vertiefung 20 abgegeben werden kann. Die Wirkstoffabgabeeinheit ist hierbei ausgebildet, eine definierte Menge an Wirkstoff 38 an den Stempelendbereich 16 abzugeben.

Demnach kann nach der Abgabe des Wirkstoffes 38 an den Stempelendbereich 16 bzw. die Vertiefung 20 des Stempels 12 bei der nachfolgenden Druckbeaufschlagung des Unkrauts 18 mittels des Stempelendbereiches 16 auch der Wirkstoff 38 durch Kontaktübertragung an das Unkraut 18 abgegeben werden, um das mechanisch vorbeschädigte Unkraut 18 zusätzlich chemisch zu beschädigen.

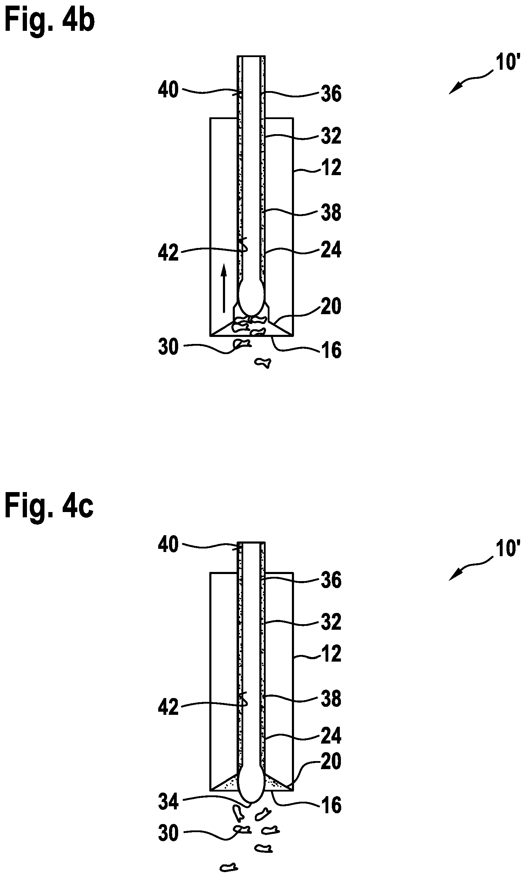

Fig. 4a-c zeigen eine weitere Ausgestaltung des Reinigungsstiftes 32 einer Vorrichtung 10'. Analog zu dem in Fig. 3a-c gezeigten Ausführungsbeispiel weist der Reinigungsstift 32 ebenfalls einen Reinigungsstiftkanal 36 auf. Hierbei ist der Reinigungsstiftkanal 36 jedoch an einer innerhalb des Stempelkanals 24 angeordneten Außenfläche 40 des Reinigungsstiftes 32 angeordnet. Der Reinigungsstiftkanal 36 ist somit zwischen der Außenfläche 40 des Reinigungsstiftes 32 und einer Innenfläche 42 des Stempels 12 angeordnet bzw. wird durch diese beiden Flächen 40, 42 definiert.

Der Ablauf entspricht dem des in Fig. 3a-c beschriebenen Ausführungsbeispiels.

Ohne den Rahmen der vorliegenden Erfindung zu verlassen, ist es durchaus denkbar, in den Ausführungsbeispielen aus Fig. 3a-c und 4a-c eine Druckgasabgabeeinheit 14 zusätzlich oder anstatt der Wirkstoffabgabeeinheit vorzusehen und den Reinigungsstiftkanal 36 fluidisch verbindbar mit der Druckgasabgabeeinheit 14 auszugestalten. Hierdurch ist es möglich, den Reinigungseffekt zu optimieren, da beim Ausfahren des Reinigungsstiftendes 34 aus dem Stempelkanal 24 zusätzlich zu der Reinigung mittels des Reinigungsstiftes 32 auch eine Reinigung mittels des Druckgases 28, d.h. mittels Druckluftspülung erfolgt.

Des Weiteren ist es denkbar, bei den vorangehend beschriebenen Vorrichtungen 10; 10' zusätzlich ein (hier nicht dargestelltes) Niederhalteelement aufweisen, welche unabhängig von der Lagereinheit 22 bewegbar gelagert ist. Das Niederhalteelement ist dabei nicht Teil der Lagereinheit 22, an welcher der Stempel 12 translatorisch bewegbar gelagert ist. Das Niederhalteelement kann bspw. unmittelbar an dem Stempel 12 gelagert bzw. geführt sein. Das Niederhalteelement kann ausschließlich an dem Stempel 12 gelagert bzw. geführt sein. Das Niederhalteelement kann bevorzugt an seinem der Lagereinheit 22 abgewandten und somit dem Erdboden zugewandten Längsende stumpf ausgebildet sein, um im Gegensatz zum Stempel 12 nicht mit in das Erdreich einzudringen, sondern federbelastet auf der Oberfläche des Erdbodens aufzusitzen. Das Niederhalteelement kann einen Grundkörper aufweisen, welcher sich von einem ersten der Lagereinheit 22 zugewandten Längsende bis zu einem zweiten der Lagereinheit abgewandten Längsende des Niederhalteelements erstreckt, wobei der Grundkörper hohlzylinderförmig ausgebildet ist und/oder mindestens einen Abstandszylinder aufweist. Hierbei ist es insbesondere vorteilhaft, wenn das Niederhalteelement an seinem zweiten der Lagereinheit abgewandten Längsende einen Ring und/oder eine kragenförmige Ausformung und/oder zumindest ein plattenförmiges Element aufweist. Mittels des bewegbar gelagerten Niederhalteelements kann vorteilhafterweise die das Unkraut 18 umgebende, insbesondere feuchte bzw. klebrige Erde bzw. Erdmasse beim Stempelvorgang, insbesondere während des Zurückziehens des Stempels 12 aus dem Erdreich heruntergedrückt, d.h. niedergehalten werden, so dass diese nicht am Stempel 12, insbesondere an der Außenfläche des Stempels 12 haften bleiben kann. Durch das Unterbinden eines Anhaftens der Erdmasse am Stempel 12 kann verhindert werden, dass eine neben dem Unkraut 18 stehende Kulturpflanze getroffen und beschädigt wird sowie die vorgesehene Dynamik des Stempelvorgangs beibehalten wird.

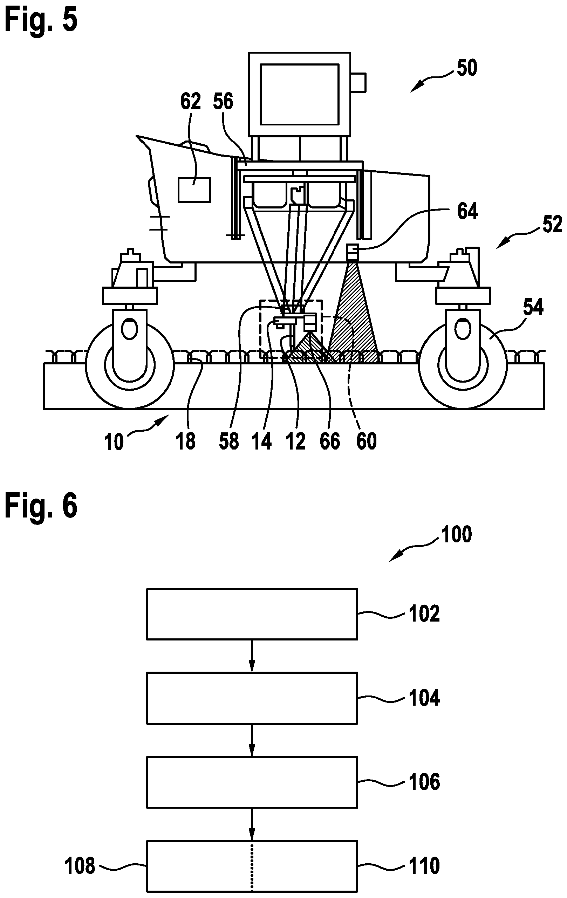

In Fig. 5 ist ein erfindungsgemäßes System zur Beschädigung von Unkraut 18 dargestellt, welches in seiner Gesamtheit mit der Bezugsziffer 50 versehen ist.

Das System 50 ist hierbei als autonomes Fahrzeug ausgebildet. Das System 50 weist eine erfindungsgemäße Unkrautbeschädigungsvorrichtung 10 bzw. eine Vorrichtung 10 zur Beschädigung von Unkraut 18 gemäß der vorangehend beschriebenen Ausführungsform aus Fig. 1a-c auf. Es ist jedoch eine beliebige Unkrautbeschädigungsvorrichtung 10; 10' an dem System 50 denkbar. Das System 50 ist als mobile Plattform ausgebildet. Hierfür weist das System 50 eine Antriebseinheit 52 mit Rädern 54 auf. Es ist jedoch jegliche, dem Fachmann bekannte Antriebsart denkbar, welche dem System 50 eine Mobilität verschaffen kann.

Das System 50 weist ferner eine Manipulatoreinheit 56 auf, an deren unterem Manipulatorabschnitt 58 die Unkrautbeschädigungsvorrichtung 10 mit dem Stempel 12 und der Druckgasabgabeeinheit 14 angeordnet ist. Der Stempel 12 ist hierbei zwischen der Manipulatoreinheit 56 und dem Boden angeordnet und weist in Richtung des Unkrauts 18. Um nun eine bildbasierte Regelung zur exakten Positionierung des Stempels 12 zu ermöglichen, weist das System 50 ferner eine Detektionseinheit 60 und eine Steuereinheit 62 auf. Die Detektionseinheit 60 weist eine Klassifizierungseinheit 64 und eine Lokalisierungseinheit 66 auf.

Hierbei ist die Klassifizierungseinheit 64 als bildgebendes System in Form einer Kameraeinheit 64 ausgeführt. Die Lokalisierungseinheit 66 ist als Visual-Servoing-Kamera 66 ausgeführt und dem unteren Manipulatorabschnitt 58 der Manipulatoreinheit 56 neben dem Stempel 12 angeordnet. Demzufolge ist die Visual-Servoing-Kamera 66 über dem Boden "schwebend" angeordnet und wird dementsprechend zusammen mit dem Stempel 12 bewegt bzw. positioniert.

Durch diese Anordnung kann die Lokalisierungseinheit 66 bzw. die Visual-Servoing-Kamera 66 in unmittelbarer Nähe zu dem Unkraut 18 äußerst präzise die Relativpositionen vom dem Stempel 12 zu dem Unkraut 18 ermitteln. Die Lokalisierungseinheit 66 ermittelt basierend auf den Positionsdaten bzw. den Erkennungsdaten der Klassifizierungseinheit 64 die Relativposition, vorzugsweise mittels einer (nicht gezeigten) Rechnereinheit.

Ohne den Rahmen der vorliegenden Erfindung zu verlassen, ist es jedoch durchaus auch denkbar, dass die Klassifizierungseinheit 64 und die Lokalisierungseinheit 66 als eine Einheit ausgebildet sind. Demnach würde die Einheit 64, 66 umfassend die Klassifizierungseinheit 64 und die Lokalisierungseinheit 66 eine Doppelaufgabe erfüllen, nämlich die vorangehend beschriebene Klassifikationsaufgabe (Erkennung des Unkrauts 18) und die Ermittlung der Relativpositionen des Stempels 12 zu dem Unkraut 18 (visual servoing), welche zur Führung des Stempels 12 dient.

Die Steuereinheit 62 empfängt die ermittelten Daten der Detektionseinheit 60 bzw. der Lokalisierungseinheit 66 und steuert entsprechend die Manipulatoreinheit 56 so an, dass der Stempel 12 in eine entsprechende Stempelposition gebracht und zu einem bestimmten Zeitpunkt bzw. bei Erreichen einer bestimmten Position relativ zu einem Unkraut 18 aktiviert wird, um den Stempelvorgang durchzuführen und das Unkraut 18 zu beschädigen.

Fig. 6 zeigt ein Ablaufdiagramm eines Ausführungsbeispiels als Verfahren 100 zur Beschädigung von Unkraut 18. Das Verfahren 100 umfasst einen Schritt 102 des Bereitstellens eines zwischen einer ersten und einer zweiten Stempelposition bewegbar angeordneten Stempels 12 mit einem Stempelendbereich 16 und einem Stempelkanal 24. Das Verfahren 100 umfasst außerdem einen Schritt 104 des Bereitstellens einer Druckgasabgabeeinheit 14, welche fluidisch mit dem Stempelkanal 24 verbunden und/oder verbindbar ist, und ggf. eines Reinigungsstiftes 32 in dem Stempelkanal 24 des Stempels 12.

Das Verfahren 100 umfasst ferner einen Schritt 106 der Druckbeaufschlagung des Unkrauts 18 mittels des Stempelendbereiches 16 des Stempels 12, um das Unkraut 18 mechanisch zu beschädigen. Das Verfahren 100 umfasst schließlich Z einen Schritt 110 des Abgebens von Druckgas 28 an den Stempelendbereich 16 des Stempels 12 mittels einer Druckgasabgabeeinheit 14, um den Stempelendbereich 16 des Stempels 12 mittels des Druckgases 28 zu reinigen und ggf. einen Schritt 108 des Positionierens des Reinigungsstiftes 32 derart, dass ein dem Stempelendbereich 16 zugewandtes Reinigungsstiftende 34 außerhalb des Stempelkanals 24 angeordnet ist, um den Stempelendbereich 16 des Stempels 12 zu reinigen.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Vorrichtung zur Beschädigung von Unkraut (18) mit einem zwischen einer ersten und einer zweiten Stempelposition bewegbar angeordneten Stempel (12), welcher einen Stempelendbereich (16) zur Druckbeaufschlagung eines Unkrauts (18) aufweist, um das Unkraut (18) mechanisch zu beschädigen, wobei der Stempel (12) translatorisch bewegbar in einer Lagereinheit (22), welche ein oder mehrere Gleitlager umfasst, gelagert ist, **dadurch gekennzeichnet, dass** der Stempel (12) einen Stempelkanal (24) aufweist, welcher fluidisch mit einer vorgesehenen Druckgasabgabeeinheit (14) verbunden und/oder verbindbar ist, um den Stempelendbereich (16) des Stempels (12) mittels eines Druckgases (28) zu reinigen.

2. Vorrichtung (10; 10') nach Anspruch 1, **dadurch gekennzeichnet, dass** sich der Stempelkanal (24) des Stempels (12) bis zum Stempelendbereich (16) erstreckt.

3. Vorrichtung (10; 10') nach Anspruch 1 oder 2, **dadurch gekennzeichnet, dass** sich der Stempelkanal (24) innerhalb des Stempels (12) entlang einer Längsrichtung des Stempels (12) erstreckt.

4. Vorrichtung (10; 10') nach einem der vorhergehenden Ansprüche, **dadurch gekennzeichnet, dass** die erste Stempelposition eine Einfahrposition ist, bei der der Stempel (12) eingefahren ist und die zweite Stempelposition eine Ausfahrposition ist, bei der der Stempel (12) ausgefahren ist.

5. Vorrichtung (10; 10') nach einem der vorhergehenden Ansprüche, **dadurch gekennzeichnet, dass** die Druckgasabgabeeinheit (14) ausgebildet ist, eine definierte Menge an Druckgas an den Stempelkanal (24) und/oder den Stempelendbereich (16) des Stempels (12) abzugeben.

6. Vorrichtung (10; 10') nach Anspruch 5, **dadurch gekennzeichnet, dass** die Druckgasabgabeeinheit (14) und der Stempelkanal (24) in der ersten und in der zweiten Stempelposition fluidisch voneinander getrennt und zwischen der ersten und der zweiten Stempelposition zumindest teilweise fluidisch miteinander verbunden sind.

7. Vorrichtung (10') nach einem der vorhergehenden Ansprüche,
**gekennzeichnet durch** einen Reinigungsstift (32), welcher in dem Stempelkanal (24) angeordnet ist, um den Stempelendbereich (16) des Stempels (12) zu reinigen.

8. Vorrichtung (10') nach Anspruch 7, **dadurch gekennzeichnet, dass** der Reinigungsstift (32) derart in dem Stempelkanal (24) des Stempels (12) angeordnet und ferner ausgebildet ist, dass bei der ersten Stempelposition des Stempels (12) ein dem Stempelendbereich (16) zugewandte Reinigungsstiftende (34) außerhalb des Stempelkanals (24) und bei der zweiten Stempelposition des Stempels (12) das dem Stempelendbereich (16) zugewandte Reinigungsstiftende (34) innerhalb des Stempelkanals (24) angeordnet ist.

9. Vorrichtung (10') nach Anspruch 7 oder 8, **dadurch gekennzeichnet, dass** der Reinigungsstift (32) zumindest einen Reinigungsstiftkanal (36) aufweist, welcher fluidisch mit der Druckgasabgabeeinheit (14) und/oder einer vorgesehenen Wirkstoffabgabeeinheit verbunden und/oder verbindbar ist.

10. Vorrichtung (10') nach Anspruch 9, **dadurch gekennzeichnet, dass** sich der zumindest eine Reinigungsstiftkanal (36) innerhalb des Reinigungsstiftes (32) und/oder an einer innerhalb des Stempelkanals (24) angeordneten Außenfläche (40) des Reinigungsstiftes (32) entlang einer Längsrichtung des Reinigungsstiftes (32) erstreckt.

11. Vorrichtung (10; 10') nach Anspruch 9 oder 10, **dadurch gekennzeichnet, dass** die Druckgasabgabeeinheit (14) ausgebildet ist, eine definierte Menge an Druckgas und/oder die Wirkstoffabgabeeinheit ausgebildet ist, eine definierte Menge an Wirkstoff (38) an den Reinigungsstiftkanal (36) und/oder den Stempelendbereich (16) des Stempels (12) abzugeben.

12. Vorrichtung (10') nach Anspruch 11, **dadurch gekennzeichnet, dass** das Reinigungsstiftende (34) des Reinigungsstift (32) ausgebildet ist, den Reinigungsstiftkanal (36) am Stempelendbereich (16) in der ersten Stempelposition des Stempels (12) zu öffnen, um eine Abgabe des Druckgases (28) und/oder des Wirkstoffes (38) zu erlauben, und in der zweiten Stempelposition des Stempels (12) zu verschließen, um eine Abgabe des Druckgases (28) und/oder des Wirkstoffes (38) zu verhindern.

13. Vorrichtung (10; 10') nach einem der vorhergehenden Ansprüche,
**gekennzeichnet durch** einen pneumatisch betriebenen Aktor, welcher ausgebildet ist, den Stempel (12) zwischen der ersten und der zweiten Stempelposition zu bewegen, wobei die Druckgasabgabeeinheit (14) ausgebildet ist, die bei der Einfahrbewegung des Stempels (12) in die erste Stempelposition von dem pneumatisch betriebenen Aktor verdrängte Abgas zumindest teilweise in den Stempelkanal (24) und/oder den Reinigungsstiftkanal (34) zu leiten.

14. System zur Beschädigung von Unkraut (18) mit einer Vorrichtung (10; 10') nach einem der vorhergehenden Ansprüche, wobei das System (50) als Fahrzeug (50), insbesondere autonomes Fahrzeug (50) oder als Handgerät ausgebildet ist.

15. Verfahren zur Beschädigung von Unkraut (18), welches insbesondere mittels einer Vorrichtung (10; 10') nach einem der Ansprüche 1 bis 13 oder einem System (50) nach Anspruch 14 durchgeführt wird, mit den Schritten:
- Bereitstellen (102) eines zwischen einer ersten und einer zweiten Stempelposition bewegbar angeordneten Stempels (12) mit einem Stempelendbereich (16) und einem Stempelkanal (24), wobei der Stempel (12) translatorisch bewegbar in einer Lagereinheit (22), welche ein oder mehrere Gleitlager umfasst, gelagert ist;
- Bereitstellen (104) einer Druckgasabgabeeinheit (14), welche fluidisch mit dem Stempelkanal (24) verbunden und/oder verbindbar ist;
- Druckbeaufschlagen (106) des Unkrauts (18) mittels des Stempelendbereiches (16) des Stempels (12), um das Unkraut (18) mechanisch zu beschädigen; und
- Abgeben (110) von Druckgas (28) an den Stempelendbereich (16) des Stempels (12) mittels einer Druckgasabgabeeinheit (14), um den Stempelendbereich (16) des Stempels (12) mittels des Druckgases (28) zu reinigen.

## Claims

1. Apparatus for damaging weeds (18), having a plunger (12) which is arranged so as to be movable between a first and a second plunger position, and which has a plunger end region (16) for applying pressure to a weed (18) in order to mechanically damage the weed (18), wherein the plunger (12) is mounted in a translationally movable manner in a bearing unit (22) which comprises one or more plain bearings,
**characterized in that** the plunger (12) has a plunger channel (24) which is and/or can be connected fluidically to a provided compressed-gas delivery unit (14) in order for the plunger end region (16) of the plunger (12) to be cleaned by means of a compressed gas (28).

2. Apparatus (10; 10') according to Claim 1,
**characterized in that** the plunger channel (24) of the plunger (12) extends as far the plunger end region (16).

3. Apparatus (10; 10') according to Claim 1 or 2,
**characterized in that** the plunger channel (24) extends within the plunger (12) along a longitudinal direction of the plunger (12).

4. Apparatus (10; 10') according to one of the preceding claims, **characterized in that** the first plunger position is a retracted position, in which the plunger (12) is retracted, and the second plunger position is an extended position, in which the plunger (12) is extended.

5. Apparatus (10; 10') according to one of the preceding claims, **characterized in that** the compressed-gas delivery unit (14) is configured to deliver a defined quantity of compressed gas to the plunger channel (24) and/or to the plunger end region (16) of the plunger (12).

6. Apparatus (10; 10') according to Claim 5,
**characterized in that** the compressed-gas delivery unit (14) and the plunger channel (24) are fluidically separated from one another in the first and in the second plunger position and are at least partially fluidically connected to one another between the first and the second plunger position.

7. Apparatus (10') according to one of the preceding claims, **characterized by** a cleaning pin (32) which is arranged in the plunger channel (24) in order to clean the plunger end region (16) of the plunger (12) .

8. Apparatus (10') according to Claim 7, **characterized in that** the cleaning pin (32) is arranged in the plunger channel (24) of the plunger (12), and is further configured, such that, in the first plunger position of the plunger (12), a cleaning-pin end (34) facing towards the plunger-end region (16) is arranged outside the plunger channel (24) and, in the second plunger position of the plunger (12), the cleaning-pin end (34) facing towards the plunger-end region (16) is arranged within the plunger channel (24).

9. Apparatus (10') according to Claim 7 or 8,
**characterized in that** the cleaning pin (32) has at least one cleaning-pin channel (36) which is and/or can be connected fluidically to the compressed-gas delivery unit (14) and/or to a provided activesubstance delivery unit.

10. Apparatus (10') according to Claim 9, **characterized in that** the at least one cleaning-pin channel (36) extends within the cleaning pin (32) and/or on an outer surface (40), arranged within the plunger channel (24), of the cleaning pin (32) along a longitudinal direction of the cleaning pin (32).

11. Apparatus (10; 10') according to Claim 9 or 10,
**characterized in that** the compressed-gas delivery unit (14) is configured to deliver a defined quantity of compressed gas, and/or the activesubstance delivery unit is configured to deliver a defined quantity of active substance (38), to the cleaning-pin channel (36) and/or to the plunger end region (16) of the plunger (12).

12. Apparatus (10') according to Claim 11, **characterized in that** the cleaning-pin end (34) of the cleaning pin (32) is configured to open up the cleaning-pin channel (36) at the plunger end region (16) in the first plunger position of the plunger (12) in order to allow a delivery of the compressed gas (28) and/or of the active substance (38), and to close off said cleaning-pin channel in the second plunger position of the plunger (12) in order to prevent a delivery of the compressed gas (28) and/or of the active substance (38).

13. Apparatus (10; 10') according to one of the preceding claims, **characterized by** a pneumatically operated actuator which is configured to move the plunger (12) between the first and the second plunger position, wherein the compressed-gas delivery unit (14) is configured to at least partially direct into the plunger channel (24) and/or the cleaning-pin channel (34) the waste gas displaced from the pneumatically operated actuator during the retraction movement of the plunger (12) into the first plunger position.

14. System for damaging weeds (18), having an apparatus (10; 10') according to one of the preceding claims, wherein the system (50) is in the form of a vehicle (50), in particular an autonomous vehicle (50), or is in the form of a hand-held device.

15. Method for damaging weeds (18), which is carried out in particular by means of an apparatus (10; 10') according to one of Claims 1 to 13 or by a system (50) according to Claim 14, comprising the steps of:
- providing (102) a plunger (12) which is arranged so as to be movable between a first and a second plunger position, and which has a plunger end region (16) and a plunger channel (24), wherein the plunger (12) is mounted in a translationally movable manner in a bearing unit (22) which comprises one or more plain bearings;
- providing (104) a compressed-gas delivery unit (14) which is and/or can be connected fluidically to the plunger channel (24);
- applying pressure (106) to the weed (18) by means of the plunger end region (16) of the plunger (12) in order to mechanically damage the weed (18); and
- delivering (110) compressed gas (28) to the plunger end region (16) of the plunger (12) by means of a compressed-gas delivery unit (14) in order for the plunger end region (16) of the plunger (12) to be cleaned by means of the compressed gas (28).

## Revendications

1. Dispositif pour endommager des mauvaises herbes (18), comprenant un poinçon (12) agencé de manière mobile entre une première et une deuxième position de poinçon, qui présente une zone d'extrémité de poinçon (16) pour solliciter en pression une mauvaise herbe (18) afin d'endommager mécaniquement la mauvaise herbe (18), le poinçon (12) étant monté de manière mobile en translation dans une unité de palier (22), qui comprend un ou plusieurs paliers lisses, **caractérisé en ce que** le poinçon (12) présente un canal de poinçon (24) qui est relié et/ou peut être relié fluidiquement à une unité de distribution de gaz comprimé (14) prévue afin de nettoyer la zone d'extrémité de poinçon (16) du poinçon (12) au moyen d'un gaz comprimé (28).

2. Dispositif (10 ; 10') selon la revendication 1,
**caractérisé en ce que** le canal de poinçon (24) du poinçon (12) s'étend jusqu'à la zone d'extrémité de poinçon (16).

3. Dispositif (10 ; 10') selon la revendication 1 ou 2, **caractérisé en ce que** le canal de poinçon (24) s'étend à l'intérieur du poinçon (12) le long d'une direction longitudinale du poinçon (12).

4. Dispositif (10 ; 10') selon l'une quelconque des revendications précédentes, **caractérisé en ce que** la première position de poinçon est une position rétractée dans laquelle le poinçon (12) est rétracté et la deuxième position de poinçon est une position déployée dans laquelle le poinçon (12) est déployé.

5. Dispositif (10 ; 10') selon l'une quelconque des revendications précédentes, **caractérisé en ce que** l'unité de distribution de gaz comprimé (14) est configurée pour distribuer une quantité définie de gaz comprimé au canal de poinçon (24) et/ou à la zone d'extrémité de poinçon (16) du poinçon (12).

6. Dispositif (10 ; 10') selon la revendication 5,
**caractérisé en ce que** l'unité de distribution de gaz comprimé (14) et le canal de poinçon (24) sont séparés fluidiquement l'un de l'autre dans la première et la deuxième position de poinçon et sont au moins partiellement reliés fluidiquement l'un à l'autre entre la première et la deuxième position de poinçon.

7. Dispositif (10') selon l'une quelconque des revendications précédentes, **caractérisé par** une tige de nettoyage (32) qui est agencée dans le canal de poinçon (24) pour nettoyer la zone d'extrémité de poinçon (16) du poinçon (12).

8. Dispositif (10') selon la revendication 7,
**caractérisé en ce que** la tige de nettoyage (32) est agencée dans le canal de poinçon (24) du poinçon (12) et est en outre configurée de telle sorte que, dans la première position de poinçon du poinçon (12), une extrémité de tige de nettoyage (34) tournée vers la zone d'extrémité de poinçon (16) est agencée à l'extérieur du canal de poinçon (24) et, dans la deuxième position de poinçon du poinçon (12), l'extrémité de tige de nettoyage (34) tournée vers la zone d'extrémité de poinçon (16) est agencée à l'intérieur du canal de poinçon (24).

9. Dispositif (10') selon la revendication 7 ou 8,
**caractérisé en ce que** la tige de nettoyage (32) présente au moins un canal de tige de nettoyage (36) qui est relié et/ou peut être relié fluidiquement à l'unité de distribution de gaz comprimé (14) et/ou à une unité de distribution de substance active prévue.

10. Dispositif (10') selon la revendication 9,
**caractérisé en ce que** l'au moins un canal de tige de nettoyage (36) s'étend à l'intérieur de la tige de nettoyage (32) et/ou sur une surface extérieure (40) de la tige de nettoyage (32) agencée à l'intérieur du canal de poinçon (24) le long d'une direction longitudinale de la tige de nettoyage (32).

11. Dispositif (10 ; 10') selon la revendication 9 ou 10, **caractérisé en ce que** l'unité de distribution de gaz comprimé (14) est configurée pour distribuer une quantité définie de gaz comprimé et/ou l'unité de distribution de substance active est configurée pour distribuer une quantité définie de substance active (38) au canal de tige de nettoyage (36) et/ou à la zone d'extrémité de poinçon (16) du poinçon (12).

12. Dispositif (10') selon la revendication 11,
**caractérisé en ce que** l'extrémité de tige de nettoyage (34) de la tige de nettoyage (32) est configurée pour ouvrir le canal de tige de nettoyage (36) au niveau de la zone d'extrémité de poinçon (16) dans la première position de poinçon du poinçon (12) afin de permettre une distribution du gaz comprimé (28) et/ou de la substance active (38), et pour le fermer dans la deuxième position de poinçon du poinçon (12) afin d'empêcher une distribution du gaz comprimé (28) et/ou de la substance active (38).

13. Dispositif (10 ; 10') selon l'une quelconque des revendications précédentes, **caractérisé par** un actionneur à commande pneumatique qui est configuré pour déplacer le poinçon (12) entre la première et la deuxième position de poinçon, l'unité de distribution de gaz comprimé (14) étant configurée pour diriger au moins partiellement dans le canal de poinçon (24) et/ou le canal de tige de nettoyage (34) le gaz d'échappement refoulé par l'actionneur à commande pneumatique lors du déplacement de rétraction du poinçon (12) dans la première position de poinçon.

14. Système pour endommager des mauvaises herbes (18) comprenant un dispositif (10 ; 10') selon l'une quelconque des revendications précédentes, le système (50) étant configuré sous forme de véhicule (50), notamment véhicule autonome (50) ou sous forme d'appareil manuel.

15. Procédé pour endommager des mauvaises herbes (18), qui est notamment réalisé au moyen d'un dispositif (10 ; 10') selon l'une quelconque des revendications 1 à 13 ou d'un système (50) selon la revendication 14, comprenant les étapes suivantes :
- la fourniture (102) d'un poinçon (12) agencé de manière mobile entre une première et une deuxième position de poinçon, comprenant une zone d'extrémité de poinçon (16) et un canal de poinçon (24), le poinçon (12) étant monté de manière mobile en translation dans une unité de palier (22) qui comprend un ou plusieurs paliers lisses ;
- la fourniture (104) d'une unité de distribution de gaz comprimé (14), qui est reliée et/ou peut être reliée fluidiquement au canal de poinçon (24) ;
- la sollicitation en pression (106) de la mauvaise herbe (18) au moyen de la zone d'extrémité de poinçon (16) du poinçon (12) afin d'endommager mécaniquement la mauvaise herbe (18) ; et
- la distribution (110) de gaz comprimé (28) à la zone d'extrémité de poinçon (16) du poinçon (12) au moyen d'une unité de distribution de gaz comprimé (14) afin de nettoyer la zone d'extrémité de poinçon (16) du poinçon (12) au moyen du gaz comprimé (28).
